# EUROPÄISCHE PATENTSCHRIFT

(11) **EP 0 741 017 B1**
(45) Veröffentlichungstag und Bekanntmachung des Hinweises auf die Patenterteilung: **26.05.1999**
(21) Anmeldenummer: 96104695.0
(22) Anmeldetag: 25.03.1996
(51) Int. Cl.: B41F 13/20

(54) **Halterung für auf Wellenzapfen aufgesetzte Lager**
Bearing support disposed on the ends of shafts
Support de palier pour des extrémités d'arbres

(30) Priorität: 04.05.1995 DE 19516455
(43) Veröffentlichungstag der Anmeldung: 06.11.1996
(73) Patentinhaber: Windmöller & Hölscher, D-49525 Lengerich (DE)
(72) Erfinder: Rogge, Günter, 49536 Lienen (DE); Jost-Enneking, Werner, 49504 Lotte (DE)

(56) Entgegenhaltungen:
- EP-A- 0 492 102
- EP-B- 0 438 733
- US-A- 1 379 818
- US-A- 5 102 238

## Beschreibung

Die Erfindung betrifft eine Halterung für auf Wellenzapfen aufgesetzte Lager, vorzugsweise für Lager von Druck- und Farbauftragswalzen von Druckmaschinen, bestehend aus einer unteren gestellfesten Tragschale und aus einem schwenkbar mit dieser verbundenen Deckelteil, das mit einem unteren, einen Betätigungsteil bildenden Hebel versehen ist, der in der geöffneten Stellung des Dekkelteils derart in oder über die Tragschale ragt, daß er durch Absenken des gegen diese stoßenden, auf den Wellenzapfen aufgesetzten Lagers in die Tragschale den Deckelteil in seine Schließstellung verschwenkt, in der dieser mit seiner kreisbogenförmig gekrümmten inneren Seite dicht an dem Lager anliegt und das in seiner auf das in die Tragschale eingelegte Lager geklappten Schließstellung verriegelbar ist.

Aus EP 0 438 733 B1 ist eine Halterung dieser Art bekannt, die es ermöglicht, Wellenzapfen mit auf diese aufgesetzten Lagern durch automatisierte Einrichtungen in Lagerhalterungen einzusetzen und aus diesen auszuheben, ohne daß manuelle Arbeiten zum Öffnen und Schließen der Halterungen notwendig sind. Diese bekannte Halterung ist jedoch verhältnismäßig aufwendig, da bei dieser an der Tragschale zwei Deckelteile schwenkbar gelagert sind, die in ihrer die Schließstellung geklappten Stellung mit ihren Stirnseiten aneinanderliegen und mit einer diese verbindenden Verriegelungseinrichtung versehen sind.

Aufgabe der Erfindung ist es, eine einfacher ausgestaltete Halterung der eingangs angegebenen Art zu schaffen.

Erfindungsgemäß wird diese Aufgabe dadurch gelöst, daß ein einziges Deckelteil schwenkbar mit einem Verriegelungshebel versehen ist, der einen endseitigen hakenförmigen Teil aufweist, das mit einem Widerlager der Tragschale verhakt, und daß eine den Verriegelungshebel selbsttätig verschwenkende Einrichtung vorgesehen ist. Die erfindungsgemäße Halterung zeichnet sich durch eine einfache Konstruktion aus, da diese nur ein einziges klappbares Dekkelteil besitzt, dessen freies Ende einfach und schnell zur Fixierung des Lagers mit der Tragschale verriegelbar ist.

Zweckmäßigerweise besteht die den Verriegelungshebel selbsttätig schwenkende Einrichtung aus einer diesen in Schließrichtung beaufschlagenden Druckfeder, die durch ein angetriebenes Stößel o. dgl. in ihre Öffnungsstellung drückbar ist. Die Druckfeder kann aus Tellerfedern bestehen. Durch eine Packung von Tellerfedern läßt sich bei nur einer geringen Federhöhe eine hohe Druckkraft erzeugen.

Nach einer bevorzugten Ausführungsform ist vorgesehen, daß das angetriebene Stößel die Kolbenstange eines Pneumatikzylinders ist.

Das Widerlager kann aus einem hintergreifbaren Bolzen der Tragschale bestehen. Das hakenförmige Teil besitzt vorzugsweise eine keilförmig abgeschrägte Flanke, die spannend an dem Widerlager angreift. Auf diese Weise ist eine spielfreie Halterung des Lagers sichergestellt.

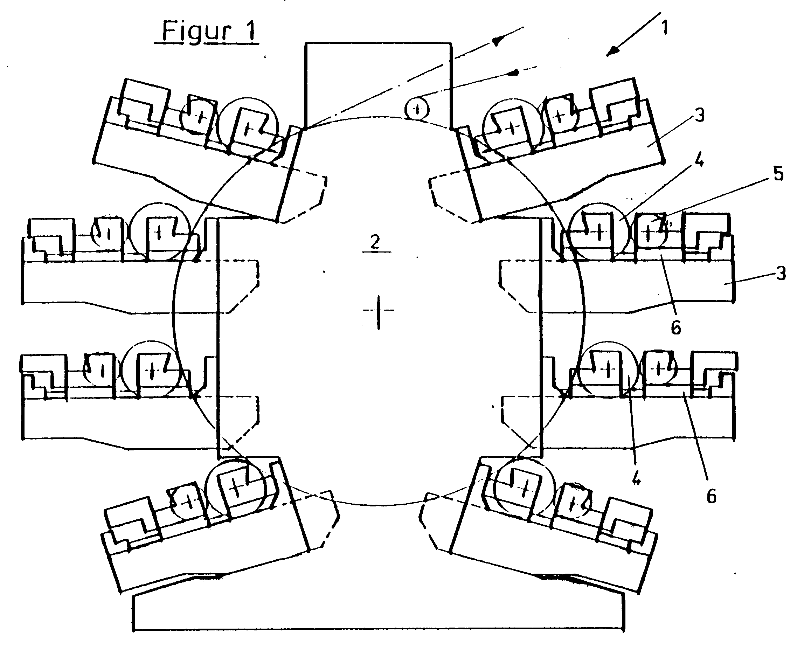

Ein Ausführungsbeispiel der Erfindung wird nachstehend anhand der Zeichnung näher erläutert. In dieser zeigt
- Fig. 1: eine Flexodruckmaschine in schematischer Seitenansicht,
- Fig. 2: eine Seitenansicht eines Lagerblocks einer Rasterwalze mit der in seiner geöffneten Stellung befindlichen Lagerhalterung,
- Fig. 3: den Lagerbock nach Fig. 2 mit der in seiner Schließstellung befindlichen Lagerhalterung,
- Fig. 4: eine Ansicht des Lagerbocks in Richtung des Pfeils X in Fig. 3 und
- Fig. 5: einen Schnitt durch den Lagerbock längs der Linie A-B in Fig. 3.

Eine Flexodruckmaschine 1 ist mit einem zentralen Gegendruckzylinder 2 versehen, an den die Druckwalzen 4 sämtlicher Druckwerke anstellbar sind. Die Druckzylinder 4 und die an diese anstellbaren Rasterwalzen 5 sind in Lagerböcken gelagert, die auf mit dem Gestell verbundenen Druckwerkskonsolen 3 verschieblich sind. Flexodruckmaschinen dieser Art sind beispielsweise aus DE-C-29 41 521 und aus EP-B-0 438 733 bekannt.

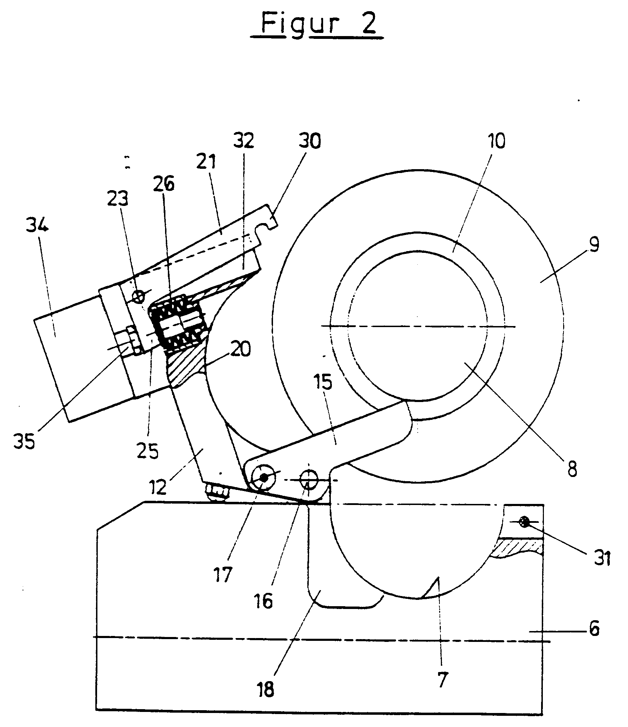

Wie aus Fig. 2 ersichtlich ist, ist jeder Rasterwalzenlagerbock 6 mit einer Tragschale 7 versehen, die eine etwa halbzylindrische Wand besitzt. In diese Tragschale 7 ist das auf den Wellenzapfen 8 der Rasterwalze 9 aufgesetzte Lager 10 einsetzbar, bei dem es sich um ein Wälzlager handeln kann, dessen äußerer Durchmesser dem Krümmungsradius der Wandung der Tragschale 7 entspricht.

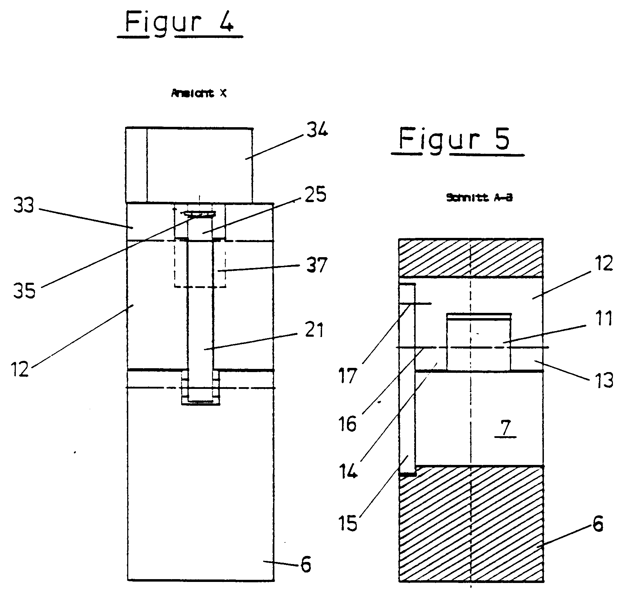

An der linken Seite der Tragschale 7 besitzt der Rasterwalzenlagerbock 6 einen Lagerbock 11 für das Deckelteil 12. Das Deckelteil 12 ist mit gegabelten Lagerschenkeln 13, 14 versehen, wobei die Lagerschenkel und der Lagerbock 11 mit fluchtenden Bohrungen versehen sind, in denen ein Lagerbock gehaltert bzw. angeordnet ist. Das Deckelteil 12 ist seitlich mit einem Hebel 15 verbunden, der in der aus den Fig. 2, 3 und 5 ersichtlichen Weise in einer seitlichen Ausnehmung des Deckelteils liegt. Der Hebel 15 ist mit einer Bohrung 16 versehen, mit der er den Lagerbolzen 16 übergreift. Zusätzlich ist er durch einen Schraubbolzen 17 mit dem Deckelteil verschraubt. Auch der Rasterwalzenlagerbock 6 ist mit einer seitlichen Ausnehmung 18 versehen, in die der Hebel 15 nach dem Einlegen des Lagers 10 in die Lagerschale 7 behinderungsfrei eintauchen kann.

Das Deckelteil ist auf seiner Unterseite mit einer zylinderschalenförmigen Ausnehmung 20 versehen, deren Krümmungsradius dem Durchmesser des Lagers 10 entspricht.

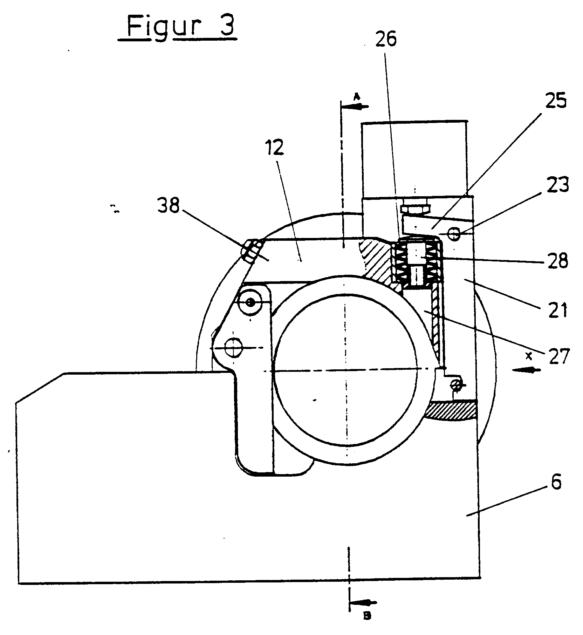

In einer Nut oder zwischen gabelförmigen Schenkeln des freien Endes des Deckelteils ist ein Verriegelungshebel 21 schwenkbar gelagert. Zur Lagerung des Verriegelungshebels 21 sind die Flanken der Nut 22 durchsetzende Bohrungen vorgesehen, in denen der den Hebel 21 lagernde Lagerbolzen 23 gehaltert ist. Der Hebel 21 ist als Winkelhebel ausgestaltet, wobei der kürzere abgewinkelte Schenkel 25 eine Bohrung des Deckelteils 12 überragt. In die Bohrung ist ein Tellerfederpaket 26 eingesetzt, von denen sich die untere Tellerfeder auf einer Ringstufe der Bohrung 27 abstützt. Die Bohrungen der Tellerfedern durchsetzt ein mit einem oberen verbreiterten Kopf versehener Bolzen 28, wobei sich die obere Tellerfeder auf der durch den Kopf gebildeten Ringstufe abstützt. Der Kopf des Bolzens 28 stützt sich in der aus den Fig. 2 und 3 ersichtlichen Weise auf der unteren Flanke des kürzeren Hebels 25 ab, so daß das Tellerfederpaket 26 bestrebt ist, den Hebel 21 in seine aus Fig. 3 ersichtliche Schließstellung zu verschwenken.

Der Hebel 21 ist an seinem freien unteren Ende mit einem hakenförmigen Teil 30 versehen, das in seiner aus Fig. 3 ersichtlichen Verriegelungsstellung einen in einer Nut des Rasterwalzenlagerbocks 6 gehalterten, ein Widerlager bildenden Bolzen 31 hintergreift.

Auf das Deckelteil 12 ist eine Halterung 33 für einen Pneumatikzylinder 34 aufgesetzt, dessen Kolbenstange 35 sich auf dem kürzeren Hebelarm 25 des Verriegelungshebel 21 abstützt. Wird der Pneumatikzylinder 34 mit Druck beaufschlagt, fährt die Kolbenstange 35 aus und verschwenkt den Verriegelungshebel 31 gegen die Kraft des Tellerfederpakets 26 in die aus Fig. 2 ersichtliche entriegelte Stellung.

In der aus Fig. 3 ersichtlichen Stellung ist der Pneumatikzylinder 34 drucklos, so daß der Verriegelungshebel 31 allein durch das Tellerfederpaket 26 in seiner verriegelten Stellung gehalten ist.

Das Deckelteil 12 ist mit einem Anschlag 38 versehen, mit dem sich dieses in seiner aus Fig. 2 ersichtlichen geöffneten Stellung auf dem Rasterwalzenlagerbock 6 abstützen kann.

## Patentansprüche

1. Halterung für auf Wellenzapfen aufgesetzte Lager, vorzugsweise für Lager von Druck- und Farbauftragswalzen von Druckmaschinen, bestehend aus einer unteren gestellfesten Tragschale und aus einem schwenkbar mit dieser verbundenen Deckelteil, das mit einem unteren, einen Betätigungsteil bildenden Hebel versehen ist, der in der geöffneten Stellung des Dekkelteils derart in oder über die Tragschale ragt, daß er durch Absenken des gegen diese stoßenden, auf den Wellenzapfen aufgesetzten Lagers in die Tragschale das Deckelteil in seine Schließstellung verschwenkt, in der dieses mit seiner kreisbogenförmig gekrümmten inneren Seite dicht an dem Lager anliegt, und daß in seiner auf das in die Tragschale eingelegte Lager geklappten Schließstellung verriegelbar ist,
**dadurch gekennzeichnet**,
daß ein einziges Deckelteil (12) schwenkbar mit einem Verriegelungshebel (21) versehen ist, der einen endseitigen hakenförmigen Teil (30) aufweist, das mit einem Widerlager (31) der Tragschale (6) verhakt, und daß eine den Verriegelungshebel (21) selbsttätig verschwenkende Einrichtung vorgesehen ist.

2. Halterung nach Anspruch 1, dadurch gekennzeichnet, daß die den Verriegelungshebel (21) verschwenkende Einrichtung aus einer diesen in Schließrichtung beaufschlagenden Druckfeder (26) besteht, die durch ein angetriebenes Stößel (35) o. dgl. in ihre Öfffnungstellung drückbar ist.

3. Halterung nach Anspruch 2, dadurch gekennzeichnet, daß die Druckfeder aus einem Tellerfederpaket (26) besteht

4. Halterung nach Anspruch 2 oder 3, dadurch gekennzeichnet, daß das angetriebene Stößel die Kolbenstange (35) eines Pneumatikzylinders (34) ist.

5. Halterung nach einem der Ansprüche 1 bis 4, dadurch gekennzeichnet, daß das Widerlager aus einem hintergreifbaren Bolzen (31) der Tragschale besteht.

6. Halterung nach einem der Ansprüche 1 bis 5, dadurch gekennzeichnet, daß das hakenförmige Teil (30) eine keilförmig abgeschrägte Flanke besitzt, die spannend an dem Widerlager (31) angreift.

## Claims

1. Retainer for bearings fitted to shaft journals, preferably for bearings of impression rolls and ink applicator rolls of printing machines, comprising a lower support shell that is fixed to the frame, and a cover part, which is pivotably connected to the said shell and is provided with a lower lever, which forms an actuating part and, when the cover part is in the open position, projects into or beyond the support shell in such a way that as a result of the bearing, which abuts against the said shell and is fitted to the shaft journal, being lowered into the support shell, the cover part is pivoted into its closed position in which the said cover part rests closely, by way of its arcuately curved inner side, on the bearing, and that the said cover part can be locked in its closed position in which it is folded onto the bearing inserted into the support shell,
characterized in that
a single cover part (12) is pivotably provided with a locking lever (21) which has a hook-shaped part (30) at one end, this part hooking over an abutment (31) on the support shell (6); and in that a device which automatically pivots the locking lever (21) is provided.

2. Retainer according to Claim 1, characterized in that the device that pivots the locking lever (21) comprises a compression spring (26) which acts on the said lever (21) in the closing direction and can be pressed into its open position by a driven plunger (35) or the like.

3. Retainer according to Claim 2, characterized in that the compression spring comprises a disc-spring assembly (26).

4. Retainer according to Claim 2 or 3, characterized in that the driven plunger is the piston rod (35) of a pneumatic cylinder (34).

5. Retainer according to one of Claims 1 to 4, characterized in that the abutment comprises a bolt (31), behind which something can engage, on the support shell.

6. Retainer according to one of Claims 1 to 5, characterized in that the hook-shaped part (30) has a wedge-shaped bevelled flank, which acts in a tensioning manner on the abutment (31).

## Revendications

1. Support pour des paliers disposés sur des tourillons d'arbre, de préférence pour des paliers de rouleaux d'impression et d'encrage de machines d'impression, constitué d'une coupelle de support inférieure, solidaire du châssis et d'une partie de couvercle reliée d'une manière pivotante à celle-ci qui est pourvue d'un levier inférieur, formant une pièce d'actionnement qui, dans la position ouverte de la partie de couvercle, fait saillie dans ou au-delà de la coupelle de support de telle manière qu'il fait pivoter, par un abaissement du palier heurtant celle-ci, disposé sur le tourillon d'arbre, dans la coupelle de support, la partie de couvercle dans sa position de fermeture dans laquelle celle-ci, avec son côté intérieur courbé en forme d'arc de cercle, s'applique étroitement au palier et qui peut être verrouillée dans sa position de fermeture rabattue sur le palier placé dans la coupelle de support, caractérisé en ce qu'une seule partie de couvercle (12) est reliée d'une manière pivotante à un levier de verrouillage (21) qui présente une partie (30) en forme de crochet au côté de l'extrémité qui s'accroche à une butée (31) de la coupelle de support (6), et en ce qu'il est prévu un dispositif faisant pivoter automatiquement le levier de verrouillage (21).

2. Support selon la revendication 1, caractérisé en ce que le dispositif faisant pivoter le levier de verrouillage (21) est constitué d'un ressort de pression (26) sollicitant celui-ci dans la direction de fermeture qui peut être poussé par un poussoir entraîné (35) ou analogue dans sa position d'ouverture.

3. Support selon la revendication 2, caractérisé en ce que le ressort de pression est constitué d'un groupe de ressorts à disques (26).

4. Support selon la revendication 2 ou 3, caractérisé en ce que le poussoir entraîné est la tige de piston (35) d'un vérin pneumatique (34).

5. Support selon l'une des revendications 1 à 4, caractérisé en ce que la butée est constituée d'un boulon (31) derrière lequel on peut passer de la coupelle de support.

6. Support selon l'une des revendications 1 à 5, caractérisé en ce que la partie en forme de crochet (30) possède un flanc conique qui s'applique sous tension à la butée (31).
